# EUROPÄISCHE PATENTSCHRIFT

(11) **EP 3 693 501 B1**
(45) Veröffentlichungstag und Bekanntmachung des Hinweises auf die Patenterteilung: **31.08.2022**
(21) Anmeldenummer: 19155657.0
(22) Anmeldetag: 06.02.2019
(51) Int. Cl.: D04H 18/02, F16H 35/00

(54) **NADELMASCHINE**
NEEDLE MACHINE
AIGUILLETEUSE

(43) Veröffentlichungstag der Anmeldung: 12.08.2020
(73) Patentinhaber: Oskar Dilo Maschinenfabrik KG, 69412 Eberbach (DE)
(72) Erfinder: Wolff, Ulrich, 69412 Eberbach (DE); Müller, Jochen, 69412 Eberbach (DE)
(74) Vertreter: Wächter, Jochen

(56) Entgegenhaltungen:
- EP-A2- 1 939 343
- WO-A1-2009/127520
- WO-A1-2011/029487
- DE-A1- 10 239 635
- DE-A1- 19 615 697

## Beschreibung

Die Erfindung betrifft eine Nadelmaschine zum Vernadeln einer Vliesbahn mit einer Vestelleinrichtung zum Verstellen der Winkelposition zweier Hauptwellen einer Hauptantriebseinrichtung der Nadelmaschine relativ zueinander.

Nadelmaschinen sind dem Fachmann allgemein bekannt und beispielsweise in Lünenschloß und Albrecht: "Vliesstoffe", Georg Thieme Verlag, Stuttgart 1982, Seiten 122 bis 129 beschrieben.

Üblicherweise wird bei Nadelmaschinen ein Vlies am Einlauf der Nadelmaschine zugeführt und in einer Förderrichtung der Vliesbahn zu einer Nadelzone gefördert. Im Bereich der Nadelzone ist mindestens ein Nadelbalken mit einem daran befestigten Nadelbrett angeordnet, welches mit Nadeln zum Verfestigen des Vlieses bestückt ist. Die Nadeln verdichten das Vlies, indem sie in den Vliesstoff in einer Einstichrichtung mit hoher Frequenz hineingestochen und wieder herausgezogen werden. Das entstehende Produkt ist ein verfestigtes Vlies. Dem Fachmann sind die unterschiedlichsten Formen von Nadelmaschinen bekannt, darunter auch Doppelnadelmaschinen, bei denen von oben und von unten mittels zweier Nadelbalken genadelt wird, oder Nadelmaschinen, bei denen der Nadelbalken während des Verfestigungsvorgangs in Förderrichtung der Vliesbahn mit der Vliesbahn mitbewegt wird.

Um die an dem Nadelbalken angeordneten Nadeln in die Vliesbahn hineinzustechen und wieder herauszuziehen umfassen Nadelmaschinen eine Antriebseinrichtung, die den Hub des Nadelbalkens in Einstichrichtung bewirkt. Solche Antriebseinrichtungen umfassen beispielsweise zwei Hauptwellen, auf denen jeweils ein Hauptpleuel exzentrisch gelagert ist, sodass eine Drehbewegung der Hauptwellen mittels der Hauptpleuel in eine Hubbewegung des Nadelbalkens in Einstichrichtung umgewandelt wird. Die Hauptwellen können durch eine Getriebeanordnung gekoppelt sein und drehen bevorzugt in entgegengesetzte Drehrichtungen. Dadurch können Kräfte quer zur Einstichrichtung, die durch die exzentrische Bewegung der Hauptpleuel entstehen, neutralisiert werden. Aufgrund der Kopplung der beiden Hauptwellen mittels einer Getriebeanordnung ist es ausreichend, eine der Hauptwellen durch einen Antrieb umlaufend anzutreiben.

Nadelmaschinen, bei denen der Nadelbalken während des Verfestigungsvorgangs in Förderrichtung der Vliesbahn mitbewegt werden soll, umfassen in der Regel zudem einen Nebenantrieb oder zumindest eine Horizontalführung. Durch Überlagerung der Hubbewegung des Nadelbalkens in Einstichrichtung mit der Hubbewegung des Nadelbalkens in Förderrichtung der Vliesbahn wird der Nadelbalken im Wesentlichen auf einer elliptischen Bahn bewegt. Derartige Nadelmaschinen sind zum Beispiel aus EP 0 892 102A bekannt. Es ist wünschenswert den Hub des Nadelbalkens in Förderrichtung der Vliesbahn an die im Einzelfall vorliegenden Anforderungen anpassen zu können.

Eine Möglichkeit der Einstellung besteht in einer Verstellung der Phasenlage der beiden Hauptwellen. Je nach Phasenlage der Hauptwellen zueinander ergibt sich eine ellipsenähnliche Bewegungsform, in welcher die oszillierende Bewegung des Nadelbalkens ausgeführt wird. Beispiele von Nadelmaschinen mit der Möglichkeit einer Phasenverstellung der Hauptwellen zueinander finden sich in der DE 10 2005 012 265 A1.

Bisherige Lösungen zur Phasenverstellung der Hauptwellen zueinander weisen jedoch die Nachteile auf, dass Verstellvorrichtungen vorzusehen sind, die in der Regel einen komplexen Aufbau aufweisen, verhältnismäßig viel Bauraum beanspruchen und, in den Fällen in denen sie in die Drehmomentübertagung zwischen den beiden Hauptwellen eingreifen, zusätzliche Verluste bewirken.

Der vorliegenden Erfindung liegt daher die Aufgabe zugrunde, eine Nadelmaschine zum Vernadeln einer Vliesbahn bereit zu stellen, bei der die Phasenlage der Hauptwellen auf mechanisch einfache Weise verstellbar und ohne großen Aufwand platzsparend in die Nadelmaschine integrierbar ist.

Diese Aufgabe wird durch die Merkmale des Anspruchs 1 gelöst. Vorteilhafte Ausgestaltungen sind Gegenstand der abhängigen Unteransprüche.

Erfindungsgemäß umfasst eine Nadelmaschine zum Vernadeln einer Vliesbahn eine Nadelbalkenanordnung, die mindestens einen Nadelbalken umfasst, eine erste Hauptwelle, die mittels eines ersten Hauptpleuels, der exzentrisch auf der ersten Hauptwelle gelagert ist, mit der Nadelbalkenanordnung verbunden ist, und eine zweite Hauptwelle, die mittels eines zweiten Hauptpleuels, der exzentrisch auf der zweiten Hauptwelle gelagert ist, mit der Nadelbalkenanordnung verbunden ist. Ferner umfasst die Nadelmaschine eine Getriebeanordnung, die eine Eingangswelle und zwei Ausgangswellen umfasst, wobei die erste Hauptwelle und die zweite Hauptwelle die zwei Ausgangswellen bilden, sowie einen Antrieb, der die Eingangswelle rotatorisch antreibt. Die Nadelmaschine umfasst weiterhin eine Verstelleinrichtung, die eine Getriebestufe der Getriebeanordnung umfasst und dazu eingerichtet ist, eine Winkelposition der ersten Hauptwelle und der zweiten Hauptwelle relativ zueinander zu verstellen.

Auf diese Weise ist es möglich, die Verstelleinrichtung zum Verstellen der Winkelpositionen der Hauptwellen platzsparend in der Getriebeanordnung unter zu bringen und es sind keine zusätzlichen Einrichtungen mit den Hauptpleueln und/oder der Nadelbalkenanordnung zu koppeln. Zudem kann für die Umsetzung der Verstelleinrichtung auf bekannte, standardmäßige Getriebekomponenten zurückgegriffen werden, die ein einfaches Integrieren in die Getriebeanordnung unter wenig Aufwand und einen kostengünstigen Bezug ermöglichen.

Jeweils eine Hauptwelle und der zugehörige Hauptpleuel bilden einen Kurbeltrieb für die Nadelbalkenanordnung. Sowohl der erste als auch der zweite Hauptpleuel sind gelenkig mit der Nadelbalkenanordnung verbunden.

Die Getriebeanordnung kann eine Umkehr der Drehrichtung zwischen den zwei Ausgangswellen bewirken, sodass sich die zwei Ausgangswellen gegenläufig drehen, wodurch sich zumindest bei gleichphasigem Betrieb Querkräfte weitestgehend neutralisieren. Die Ausgangswellen können sich aber auch gleichläufig drehen. Die Getriebeanordnung kann zudem, falls gewünscht, eine Übersetzung der Drehzahl zwischen den Ausgangswellen bewirken. Bevorzugt überträgt die Getriebeanordnung die Drehbewegung von der Eingangswelle auf beide Ausgangswellen.

Die Verstelleinrichtung übt eine Verstellbewegung aus, die auf zumindest eine der beiden Hauptwellen übertragen wird und einen Verstellwinkel in der jeweiligen Hauptwelle bewirkt, der als Veränderung der Winkelposition durch die eingeleitete Verstellbewegung definiert ist.

Besonders bevorzugt ist die Verstelleinrichtung als Verstellgetriebe ausgebildet, das eine Getriebestufe der Getriebeanordnung bildet. Ein Zusammenwirken mit der Getriebeanordnung ist dadurch besonders einfach möglich und die Verstellbewegung kann möglichst direkt auf die Hauptwellen übertragen werden. Über das Übersetzungsverhältnis der Getriebeanordnung und der Verstelleinrichtung ist der Verstellwinkel einfach zu bestimmen und zu regeln.

In einer bevorzugten Ausführungsform umfasst die Verstelleinrichtung eine Verstellwelle, wobei die Verstelleinrichtung und die Getriebeanordnung derart ausgebildet sind, dass eine Drehbewegung der Verstellwelle auf zumindest eine der zwei Ausgangs- bzw. Hauptwellen übertragen wird. Die Verstellwelle lässt sich einfach und präzise antreiben. Dadurch ist eine möglichst exakte Positionierung der Ausgangswellen möglich. Zudem lässt sich eine Verstellwelle einfach und platzsparend im Maschinengestell lagern.

Es ist bevorzugt, dass nur die Winkelverstellung über die Verstellwelle vorgenommen wird. D.h., dass die Verstellwelle nur zum Ändern der Winkelposition und somit zur Phasenverschiebung zwischen den beiden Hauptwellen in einem vordefinierten Bereich verdreht wird. Bei Nichtbetätigung ist die Verstellwelle fixiert. Dadurch entstehen keine zusätzlichen Verluste durch das Antreiben der Verstellwelle und der Getriebestufe, die die Verstellwelle umfasst.

In einer bevorzugten Ausführungsform umfasst die Getriebeanordnung ein erstes Planetengetriebe, wobei das erste Planetengetriebe ein Hohlrad, ein Sonnenrad und mindestens ein zwischen dem Hohlrad und dem Sonnenrad auf einem Planetenträger angeordnetes Planetenrad umfasst. Mehr bevorzugt umfasst ein Planetengetriebe eine Mehrzahl von auf einem gemeinsamen Planetenträger angeordneten Planetenräder, weshalb nachfolgend auf diese bevorzugte Ausführungsform Bezug genommen wird. Es versteht sich, dass jeweils analog nur ein Planetenrad vorgesehen sein kann. Die Verstelleinrichtung umfasst das Hohlrad, das Sonnenrad oder den Planetenträger mit den darauf angeordneten Planetenrädern. Planetengetriebe weisen eine sehr kompakte Bauform auf, da die Getriebekomponenten koaxial zu einander angeordnet sind. Zudem kann die Verstelleinrichtung einfach integriert werden, indem sie eine Komponente des Planetengetriebes bildet. Insbesondere ist zumindest das Hohlrad, der Planetenträger oder das Sonnenrad mit einer der beiden Ausgangswellen oder die Eingangswelle gekoppelt, vorzugsweise drehfest verbunden.

Es ist bevorzugt, dass zur Übertragung eines Drehmoments von der Eingangswelle oder einer der beiden Ausgangswellen auf die andere Ausgangswelle eine Stirnradstufe zwischen den entsprechenden Wellen vorgesehen ist. Das erste Planetengetriebe ist dieser Stirnradstufe dann vor- oder nachgeschaltet. Vorzugsweise wird die innere Übersetzung des Planetengetriebes durch die Stirnradstufe exakt ausgeglichen. Dadurch bewirkt die Verstelleinrichtung keine zusätzliche Übersetzung zwischen der ersten und der zweiten Hauptwelle.

Bevorzugt umfasst die Verstelleinrichtung das Sonnenrad des ersten Planetengetriebes und das Sonnenrad ist auf der Verstellwelle angeordnet. Das Sonnenrad kann mittels bekannter Welle-Nabe-Verbindungen drehfest mit der Verstellwelle verbunden sein. Dadurch wird eine Verstellbewegung über die Verstellwelle direkt in das erste Planetengetriebe eingeleitet. Bei ansonsten im Betrieb der Nadelmaschine feststehender Verstellwelle und somit feststehendem Sonnenrad erfolgt vom Planetenträger auf das Hohlrad des ersten Planetengetriebes eine Übersetzung ins Schnelle. Entsprechend kann zwischen der ersten und der zweiten Hauptwelle eine Stirnradstufe vorgesehen sein, die eine Übersetzung ins Langsame bewirkt. Vorzugsweise ist die Ausgangswelle dann mit dem Hohlrad gekoppelt und die Stirnradstufe ist mit dem Planetenträger gekoppelt. Da die Verstellwelle das Sonnenrad umfasst, ist die Verstellwelle koaxial zu den Komponenten des Planentengetriebes sowie zu einer der beiden Ausgangswellen ausgebildet, wodurch sich wiederum ein platzsparender Aufbau ergibt.

Die Verstelleinrichtung kann in einer bevorzugten Ausführungsform ein Schneckengetriebe umfassen, wobei das Hohlrad des ersten Planetengetriebes eine Außenverzahnung aufweist und ein Schneckenrad des Schneckengetriebes bildet und die Verstellwelle eine Schnecke des Schneckengetriebes umfasst. Dadurch kann eine Verstellbewegung direkt in das Hohlrad des ersten Schneckengetriebes eingeleitet und über dieses auf eine der Ausgangswellen übertragen werden. Die die Schnecke umfassende Verstellwelle benötigt wenig zusätzlichen Bauraum, sodass die Dimensionen der Getriebeanordnung im Wesentlichen nicht negativ beeinflusst werden.

Bei ansonsten im Betrieb der Nadelmaschine feststehendem Hohlrad erfolgt eine Übersetzung vom Sonnenrad auf den Planetenträger ins Langsame. Eine Stirnradstufe zwischen der ersten und der zweiten Hauptwelle bewirkt dann vorzugsweise eine entsprechende Übersetzung ins Schnelle.

Die Verwendung eines Schneckengetriebes hat den Vorteil, dass Schneckengetriebe im Allgemeinen selbsthemmend sind. Die Verstelleinrichtung muss daher während des Betriebs der Nadelmaschine, wenn keine Verstellung der Winkelposition vorgenommen wird, nicht gehemmt oder gebremst werden. Die Anzahl an Komponenten und Baugruppen kann dadurch verringert werden.

Die als Schneckengetriebe ausgebildete Verstelleinrichtung führt ferner dazu, dass die die Schnecke umfassende Verstellwelle nicht parallel zur Eingangswelle oder den Ausgangswellen der Getriebeanordnung verlaufen muss. Vielmehr kann die Verstellwelle quer zur Eingangswelle oder den Ausgangswellen und in einem beliebigen Winkel tangential zum Hohlrad angeordnet sein. Dadurch wird eine große Flexibilität bei der Anordnung und Lagerung der Verstellwelle in der Getriebeanordnung und der Nadelmaschine ermöglicht. Auf die in der Nadelmaschine vorherrschenden Platzverhältnisse kann besonders gut Rücksicht genommen werden. Zudem sind Schneckengetriebe im Allgemeinen sehr hoch belastbar.

In einer Ausführungsform weist die Verstelleinrichtung vorzugsweise ein auf der Verstellwelle angeordnetes Stirnrad auf und das Hohlrad des ersten Planetengetriebes weist eine Außenverzahnung auf, mit der das Stirnrad der Verstelleinrichtung in Eingriff steht. Auch dann kann eine Verstellbewegung unmittelbar auf das Hohlrad des ersten Planetengetriebes übertragen werden. Die Verstellwelle ist dann parallel zur Eingangswelle und den Ausgangswellen der Getriebeanordnung angeordnet.

In einer weiteren bevorzugten Ausführungsform umfasst die Getriebeanordnung neben dem ersten Planetengetriebe ein zweites Planetengetriebe, das ein Hohlrad, ein Sonnenrad und mindestens ein zwischen dem Hohlrad und dem Sonnenrad auf einem Planetenträger angeordnetes Planetenrad umfasst. Auch das zweite Planetengetriebe umfasst bevorzugt eine Mehrzahl von auf einem gemeinsamen Planetenträger angeordnete Planetenräder, wie nachfolgend beschrieben, kann jedoch jeweils analog auch nur ein Planetenrad aufweisen. Vorzugsweise sind das erste und das zweite Planetengetriebe symmetrisch angeordnet und ihre inneren Übersetzungen gleichen sich aus. Die Übertragung einer Drehbewegung von der Eingangswelle auf die Ausgangswellen kann über eine Stirnradstufe erfolgen, die zusätzlich zum ersten und zum zweiten Planetengetriebe vorgesehen ist, oder die Komponenten des ersten oder zweiten Planetengetriebes, beispielweise die Planetenträger umfasst.

In einer Ausführungsform weisen das Hohlrad des ersten Planetengetriebes und des zweiten Planetengetriebes jeweils eine Außenverzahnung auf und die Verstelleinrichtung umfasst ein auf der Verstellwelle angeordnetes Stirnrad, das mit der Außenverzahnung des Hohlrades des ersten Planetengetriebes und/oder des Hohlrades des zweiten Planetengetriebes in Eingriff steht. Steht das Stirnrad mit der Außenverzahnung beider Hohlräder in Eingriff, kann gleichzeitig eine Veränderung der Winkelposition beider Ausgangswellen erzeugt werden. Bei dieser Ausführungsform können die beiden Ausgangswellen durchgehend durch die Getriebeanordnung ausgebildet sein. Die Sonnenräder des ersten und des zweiten Planetengetriebes sind dann drehfest auf jeweils einer der beiden Ausgangswellen gelagert.

In einer anderen Ausführungsform umfasst die Verstelleinrichtung wiederum ein Schneckengetriebe, wobei das Hohlrad des ersten oder des zweiten Planetengetriebes eine Außenverzahnung aufweist und ein Schneckenrad des Schneckengetriebes bildet und die Verstellwelle eine Schnecke des Schneckengetriebes umfasst. Dadurch wird eine Verstellbewegung direkt in das Hohlrad eines der beiden Planetengetriebe eingeleitet. Die zuvor hinsichtlich des Schneckengetriebes beschriebenen Merkmale und Vorteile treffen auch auf diese Ausführungsform zu. Die Ausgangswellen können in diesem Fall mit dem Planetenträger jeweils eines der beiden Planetengetriebe drehfest verbunden sein. Die Eingangswelle umfasst vorzugsweise ein Sonnenrad des ersten oder zweiten Planetengetriebes.

In einer bevorzugten alternativen Ausführungsform umfasst die Getriebeanordnung eine schräg verzahnte Stirnradstufe mit einem ersten Stirnrad und einem mit dem ersten Stirnrad in Eingriff stehenden zweiten Stirnrad, wobei das erste Stirnrad in axialer Richtung verschiebbar gelagert ist. Die Verstelleinrichtung umfasst die schräg verzahnte Stirnradstufe und Verstellmittel, die dazu eingerichtet sind, das erste Stirnrad linear zu verschieben. Das erste und das zweite Stirnrad sind jeweils auf einer der beiden Ausgangswellen gelagert. Eine zusätzliche die Schrägverzahnung umfassende Getriebestufe zwischen den beiden Ausgangswellen ist nicht erforderlich, wodurch sich die Komplexität der Getriebeanordnung verringert und der benötigte Bauraum minimiert werden kann. Eine Schrägverzahnung kennzeichnet sich insbesondere durch eine besondere Laufruhe der Getriebestufe. Aufgrund der Schrägverzahnung führt die axiale Verschiebung des ersten Stirnrads zu einer Drehung des ersten und des zweiten Stirnrads relativ zueinander. Abhängig davon welche Ausgangswelle während der Verstellung drehfest gehalten wird, wird die Winkelposition der anderen Ausgangswelle verändert. Dadurch ist es möglich, die Winkelpositionen der ersten und der zweiten Hauptwelle relativ zueinander auch durch Einleiten einer linearen Stellbewegung zu verändern.

Vorzugsweise ist das erste Stirnrad auf der ersten Hauptwelle drehfest gelagert und das zweite Stirnrad ist auf der zweiten Hauptwelle drehfest gelagert. Dabei ist es bevorzugt, dass das erste Stirnrad mittels einer Welle-Nabe-Verbindung mit der ersten Hauptwelle verbunden ist, die eine axiale Verschiebung des ersten Stirnrads auf der ersten Hauptwelle ermöglicht, während durch die drehfeste Verbindung die Übertragung eines Drehmoments zwischen der Welle und dem Stirnrad möglich ist. Die axiale Verschiebung des ersten Stirnrads hat dadurch keine axiale Verschiebung der ersten Hauptwelle zur Folge, wodurch die Integration der Verstelleinrichtung sich nicht weiter auf die Lagerung der ersten Hauptwelle in der Nadelmaschine sowie deren Verbindung mit einem Antrieb oder dem ersten Hauptpleuel auswirkt.

Vorzugsweise umfassen die Verstellmittel eine Schiebegabel, die mit dem ersten Stirnrad gekoppelt ist. Derartige Schiebegabeln sind zum Beispiel als Schaltgabel aus KFZ-Getrieben bekannt, um ein Schalten zwischen verschiedenen Getriebestufen zu ermöglichen. Die Veränderung der relativen Winkelposition der ersten und der zweiten Hauptwelle ist dadurch mit einfachen Mitteln möglich.

Das erste Stirnrad kann alternativ auch axial auf der ersten Hauptwelle festgelegt sein und die erste Hauptwelle linear verschiebbar in der Nadelmaschine gelagert sein. Auch dadurch wird die Verstellung der Winkelposition der ersten und der zweiten Hauptwelle zueinander durch Einleitung einer linearen Stellbewegung möglich.

Dabei ist es bevorzugt, dass die erste Hauptwelle eine Ausgleichseinrichtung umfasst, die zwei Wellenabschnitte der ersten Hauptwelle drehfest und axial zueinander verschiebbar miteinander verbindet. Die Ausgleichseinrichtung nimmt die axiale Verschiebung der ersten Hauptwelle auf, so dass sich die lineare Verschiebbarkeit der ersten Hauptwelle nicht auf das erste Hauptpleuel auswirkt. Die Ausgleichseinrichtung ist bevorzugt als Zahnkupplung ausgebildet.

Es ist ersichtlich, dass durch die erfindungsgemäße Nadelmaschine eine Vielzahl von vorteilhaften Konstruktionen zur Verstellung der Winkelposition beziehungsweise Phasenlage der ersten und der zweiten Hauptwelle relativ zueinander bereitgestellt werden, wodurch die Flexibilität bei der Integration der Verstelleinrichtung in die Nadelmaschine besonders hoch ist, während die Verstelleinrichtung sehr einfach integriert werden kann und wenig Bauraum benötigt.

Weitere Vorteile und Einzelheiten der vorliegenden Erfindung ergeben sich aus der nachfolgenden Beschreibung der Figuren, in denen:
- Fig. 1: eine perspektivische Ansicht der für die Erfindung wesentlichen Komponenten einer Nadelmaschine ist, und
- Fig. 2 - 8: schematische Schnittansichten der Getriebeanordnung der erfindungsgemäßen Nadelmaschine in verschiedenen Ausführungsformen sind.

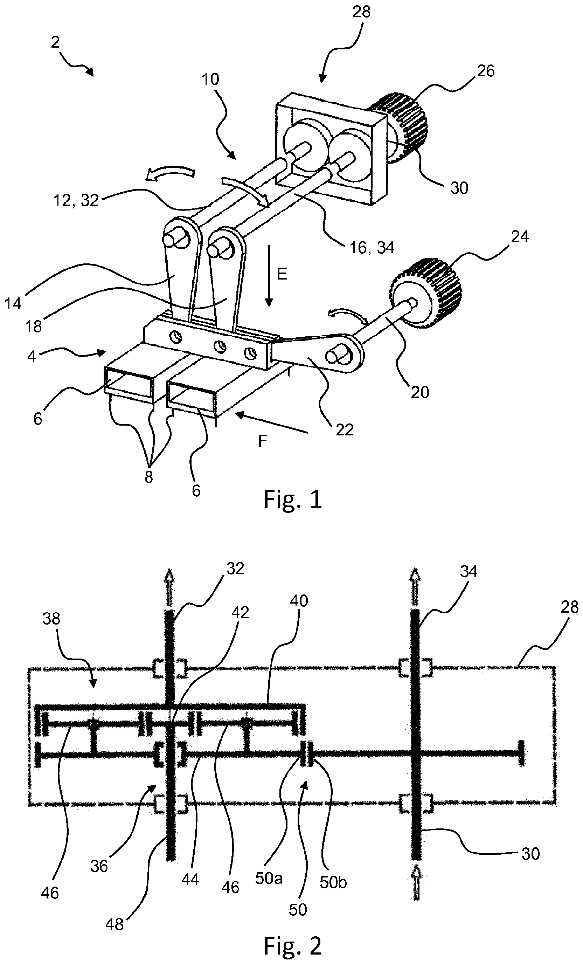

In Fig. 1 ist ein Teil einer Nadelmaschine 2 in einer perspektivischen Ansicht schematisch dargestellt. Die Nadelmaschine 2 umfasst eine Nadelbalkenanordnung 4 mit mindestens einem Nadelbalken 6. Jeder Nadelbalken 6 trägt eine Vielzahl von Nadeln 8 zum Vernadeln einer Vliesbahn, von denen exemplarisch zwei Nadeln 8 je Nadelbalken 6 dargestellt sind. Hierzu wird eine Vliesbahn unter der Nadelbalkenanordnung 4 in einer Förderrichtung F hindurchbewegt. Während die Vliesbahn unter der Nadelbalkenanordnung 4 hindurchbewegt wird, wird die Nadelbalkenanordnung 4 in einer Einstichrichtung E der Nadeln 8 auf und ab bewegt, die sich senkrecht zur Ebene der Vliesbahn erstreckt. Die Nadeln 8 dringen in die Vliesbahn ein, durchdringen diese vorzugsweise vollständig und werden wieder aus der Vliesbahn herausgezogen.

Zur Erzeugung der Hubbewegung der Nadelbalkenanordnung 4 in Einstichrichtung E umfasst die Nadelmaschine 2 eine Antriebsanordnung 10, die als Kurbeltrieb ausgebildet ist. Insbesondere umfasst die Nadelbalkenanordnung 4 eine erste Hauptwelle 12, die mittels eines ersten Hauptpleuels 14 mit der Nadelbalkenanordnung 4 verbunden ist. Der erste Hauptpleuel 14 ist exzentrisch auf der ersten Hauptwelle 12 gelagert. Ferner umfasst die Nadelmaschine eine zweite Hauptwelle 16, die mittels eines zweiten Hauptpleuels 18 mit der Nadelbalkenanordnung 4 verbunden ist. Der zweite Hauptpleuel 18 ist exzentrisch auf der zweiten Hauptwelle 16 gelagert. Durch die exzentrische Lagerung des ersten und des zweiten Hauptpleuels 14, 18, wird eine Drehbewegung der ersten und der zweiten Hauptwelle 12, 16 in eine Linearbewegung der Pleuel und somit in eine Hubbewegung der Nadelbalkenanordnung 4 in Einstichrichtung E umgewandelt. Der erste und der zweite Hauptpleuel 16, 18 sind gelenkig mit der Nadelbalkenanordnung 4 verbunden.

Optional kann eine Nebenwelle 20 vorgesehen sein, die mittels eines Nebenpleuels 22 gelenkig mit der Nadelbalkenanordnung 4 verbunden ist, wobei der Nebenpleuel 22 exzentrisch auf der Nebenwelle 20 gelagert ist. Die die Nebenwelle 20 und den Nebenpleuel 22 umfassende Nebenantriebsanordnung bewirkt eine Vorschubbewegung der Nadelbalkenanordnung 4 in Förderrichtung F der Vliesbahn, wodurch die Nadelbalkenanordnung 4 teilweise mit der Vliesbahn mitbewegt wird, während die Nadeln 8 mit der Vliesbahn in Eingriff stehen. Die Nebenantriebsanordnung kann ferner einen Nebenantrieb 24 umfassen, der die Nebenwelle 20 rotatorisch antreibt.

Die Antriebsanordnung 10 umfasst weiterhin einen Antrieb 26 zum Antreiben der ersten oder zweiten Hauptwelle 12, 16. In der dargestellten Ausführungsform treibt der Antrieb 26 die zweite Hauptwelle 16 an. Es versteht sich jedoch, dass der Antrieb 26 genauso gut die erste Hauptwelle 12 antreiben könnte. Der Antrieb 26 treibt die entsprechende aus erster und zweiter Hauptwelle 12, 16 entweder unmittelbar an oder über Zwischenelemente, wie zum Beispiel eine Übertragungseinrichtung oder ein oder mehrere Getriebestufen. Es ist auch denkbar, dass ein weiterer Antrieb an der jeweils anderen Welle vorgesehen ist.

Zur Übertragung einer Drehbewegung bzw. eines Drehmoments von der durch den Antrieb 26 angetriebenen Hauptwelle 12, 16 auf die jeweils andere Hauptwelle 12, 16 umfasst die Nadelmaschine 2 eine Getriebeanordnung 28. Die Getriebeanordnung 28 umfasst zumindest eine Getriebestufe zur Übertragung einer Drehbewegung bzw. eines Drehmoments zwischen den Hauptwellen 12, 16, die beispielsweise durch eine Stirnradstufe gebildet sein kann.

Die Getriebeanordnung 28 umfasst eine Eingangswelle 30 und zwei Ausgangswellen 32, 34, wobei die erste Hauptwelle 12 und die zweite Hauptwelle 16 die zwei Ausgangswellen 32, 34 bilden. Der Antrieb 26 treibt die Eingangswelle 30 rotatorisch an, die in Fig. 1 durch ein Getriebegehäuse verdeckt ist.

In Fig. 1 ist anhand der Verbindung zwischen den Hauptpleueln 14, 18 und der jeweiligen Hauptwelle 14, 16 zu erkennen, dass sich die beiden Hauptwellen 12, 16 in derselben Winkelposition befinden. Die Hauptpleuel 14, 18 befinden sich zu diesem Zeitpunkt in ihrem unteren Totpunkt. Werden die erste und die zweite Hauptwelle 12, 16 nun mit gleicher Drehgeschwindigkeit gedreht, vorzugsweise in entgegengesetzte Drehrichtungen, erfolgt die Bewegung des ersten und des zweiten Hauptpleuels 14, 18 gleichphasig. Das heißt, dass der erste und der zweite Hauptpleuel 14, 18 gleichzeitig ihren jeweiligen oberen Totpunkt und ihren jeweiligen unteren Totpunkt durchlaufen. Aufgrund der gelenkigen Anbindung an die Nadelbalkenanordnung 4 wird diese dadurch in Einstichrichtung E auf und ab bewegt, wobei die Nadelbalkenanordnung 4 ihre im Wesentlichen horizontale Ausrichtung beibehält.

Wird die Winkelposition der ersten und der zweiten Hauptwelle 16,18 relativ zueinander verstellt, befinden sich die Hauptpleuel 14, 18 in unterschiedlichem Abstand relativ zu ihren jeweiligen Totpunkten. Ihre Bewegung erfolgt dann nicht mehr gleichphasig. Das heißt, dass der erste und der zweite Hauptpleuel 14, 18 ihren jeweiligen unteren und oberen Totpunkt zeitlich versetzt durchlaufen. Auch dadurch ergibt sich eine Hubbewegung der Nadelbalkenanordnung 4 in Einstichrichtung E, wenn die Hauptwellen 16, 18 drehen. Allerdings wird die Nadelbalkenanordnung 4 dabei bezüglich der Horizontalen gekippt. Diese Kippbewegung kann derart ausgelegt sein, dass die Nadeln 8 nach dem Eindringen in die Vliesbahn in Förderrichtung F mit der Vliesbahn mit bewegt werden. Dadurch kann ein Verzug der Vliesbahn durch die Nadeln 8 reduziert werden.

Um den Unterschied der Winkelposition und somit der Phase der ersten und der zweiten Hauptwelle 12, 16 relativ zueinander einstellen zu können, umfasst die Nadelmaschine 2 erfindungsgemäß eine Verstelleinrichtung. Durch den Unterschied der Winkelposition kann die maximale Schrägstellung der Nadelbalkenanordnung 4 bezüglich der Horizontalen eingestellt werden. Eine maximale Schrägstellung ergibt sich, wenn einer der beiden Hauptpleuel 14, 18 sich in seinem oberen Totpunkt befindet, während sich der andere der beiden Hauptpleuel 14, 18 im unteren Totpunkt befindet.

Die Verstelleinrichtung wird nachfolgend unter Bezugnahme auf die Fig. 2 bis 8 detailliert beschrieben, in denen der schematische Aufbau der Getriebeanordnung 28 in verschiedenen Ausführungsformen dargestellt ist.

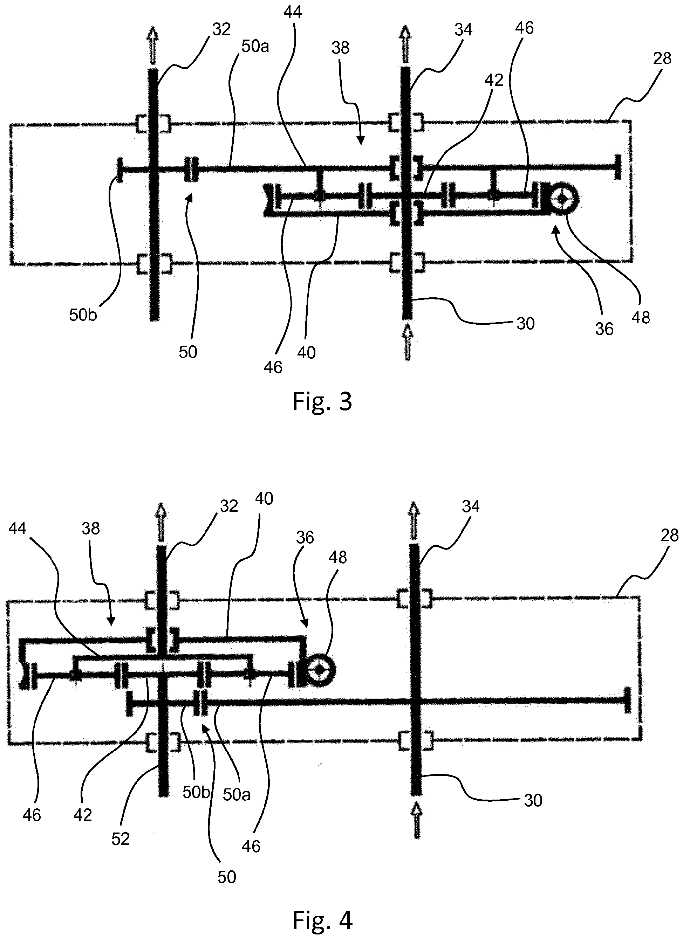

Zum Zwecke einer möglichst allgemeingültigen Beschreibung wird nachfolgend auf die erste und die zweite Ausgangswelle 32, 34 sowie die Eingangswelle 30 Bezug genommen. Es versteht sich, dass die erste Ausgangswelle durch die erste oder die zweite Hauptwelle 12, 16 gebildet sein kann und die zweite Ausgangswelle 34 dann jeweils durch die andere der beiden Hauptwellen 12, 16 gebildet ist. Die Eingangswelle 30 kann ebenfalls durch die erste oder die zweite Hauptwelle 12, 16 gebildet sein oder eine separate Eingangswelle 30 darstellen, die mittels einer oder mehrerer Getriebestufen mit der ersten und/oder der zweiten Ausgangswelle 32, 34 gekoppelt ist. Insbesondere bei den Ausführungsformen nach Fig. 3 bis 7 kann die Eingangswelle 30 auch jeweils die andere Welle sein, die auf derselben Seite wie die Eingangswelle 30 in der jeweiligen Ausführungsform aus der Getriebeanordnung 28 austritt.

Die Verstellung der Winkelposition durch eine Verstelleinrichtung 36 wird in den Ausführungsformen nach Fig. 2 bis 4 über eine Verstellung an einem Planetengetriebe 38 vorgenommen, wobei die innere Übersetzung des Planetengetriebes 38 an einer Ausgangswelle 32, 34 durch eine Stirnradstufe zwischen den Ausgangswellen 32, 34 ausgeglichen werden kann. Der Antrieb erfolgt an der Eingangswelle 30. Die Verstelleinrichtung 36 kann in allen Ausführungsformen einen Verstellantrieb umfassen.

Fig. 2 zeigt eine erste Ausführungsform der Getriebeanordnung 28 mit einer Verstelleinrichtung 36. Die Getriebeanordnung 28 umfasst ein erstes Planetengetriebe 38 mit einem Hohlrad 40, einem Sonnenrad 42 und einer Mehrzahl von auf einem gemeinsamen Planetenträger 44 angeordneten Planetenrädern 46. Die Wirkungsweise, Konstruktion und Auslegung von Planetengetrieben sind dem Fachmann allgemein bekannt. Insbesondere kann die durch das Planetengetriebe 38 bewirkte Übersetzung dadurch beeinflusst werden, welche der vorgenannten Komponenten feststehend ausgebildet ist.

Die Verstelleinrichtung 36 umfasst eine Verstellwelle 48 und das Sonnenrad 42. Das Sonnenrad 42 ist auf der Verstellwelle 48 gelagert. Vorzugsweise ist das Sonnenrad 42 als Stirnrad ausgebildet und auf der Verstellwelle 48 drehfest gelagert. Die erste Ausgangswelle 32 ist mit dem Hohlrad 40 verbunden. Der Planetenträger 44 umfasst neben den Lagerstellen für die Planetenträger 46 ein erstes Stirnrad 50a. Die Eingangswelle 30 entspricht in diesem Fall der zweiten Ausgangswelle 34. Ein zweites Stirnrad 50b ist auf der Eingangswelle 30 gelagert und bildet zusammen mit dem ersten Stirnrad 50a eine Stirnradstufe 50 zur Übertragung eines Drehmoments von der Eingangswelle 30 auf die erste Aufgangswelle 32. Die Stirnradstufe 50 bewirkt eine Übersetzung zwischen der Eingangswelle 30 und dem Planetenträger 44 ins Langsame. Die Verstellwelle 48 steht bei Nichtbetätigung fest, so dass auch das Sonnenrad 42 feststeht. Nur zur Verstellung der Winkelposition wird die Verstellwelle 48 gedreht. Die Planetenräder 46 treiben das Hohlrad 40 und darüber die erste Ausgangswelle 32 an. Die Übersetzung zwischen den Planetenrädern 46 und dem Hohlrad 40 entspricht einer Übersetzung ins Schnelle. Andere Auslegungen sind nach Belieben vorzunehmen.

Fig. 3 zeigt eine zweite Ausführungsform der Getriebeanordnung 28 mit einer Verstelleinrichtung 36. Auch diese Getriebeanordnung 28 umfasst ein erstes Planetengetriebe 38 mit einem Hohlrad 40, einem Sonnenrad 42 und einer Mehrzahl von Planetenrädern 46 auf einem gemeinsamen Planetenträger 44. Das Sonnenrad 42 ist in diesem Fall auf der Eingangswelle 30 gelagert, die durchgängig ausgebildet ist und der zweiten Ausgangswelle 34 entspricht. Die Verstelleinrichtung 36 umfasst in dieser Ausführungsform ein Schneckengetriebe, wobei das Hohlrad 40 des ersten Planetengetriebes 38 eine Außenverzahnung aufweist und ein Schneckenrad des Schneckengetriebes bildet. Die Verstellwelle 48 umfasst eine Schnecke des Schneckengetriebes. Die Verstellwelle 48 erstreckt sich in der dargestellten Ausführungsform senkrecht zur Zeichenebene und somit senkrecht zur ersten und zweiten Ausgangswelle 32, 34 und zur Eingangswelle 38.

Eine Verstellbewegung der Verstelleinrichtung 36 wird als Drehbewegung über die Verstellwelle 48 in das Hohlrad 40 eingeleitet. Bei feststehender Eingangswelle 30 wird die eingeleitete Drehbewegung über den Planetenträger 44 und die Stirnradstufe 50 auf die erste Ausgangswelle 32 übertragen. Der Planetenträger 44 umfasst hierzu das Stirnrad 50a. Das Stirnrad 50b der Stirnradstufe 50 ist auf der zweiten Ausgangswelle 32 gelagert. Wird anstelle der Eingangswelle 30 die erste Ausgangswelle 32 festgelegt, während eine Verstellbewegung über die Verstelleinrichtung 36 eingeleitet wird, wird die Verstellbewegung über das Hohlrad 40, die Planetenräder 46, deren Planetenträger 44 dann still steht, auf das Sonnenrad 42 und somit auf die zweite Ausgangswelle 34 übertragen.

Im normalen Betrieb der Nadelmaschine 2 steht das Hohlrad 40 fest. Die Übersetzung innerhalb des Planetengetriebes 38 vom Sonnenrad 42 auf den Planetenträger 44 bei Stillstand des Hohlrads 40 entspricht einer Übersetzung ins Langsame. Die Stirnradstufe 50 bewirkt dann vorzugsweise wiederum eine Übersetzung ins Schnelle in Richtung der zweiten Ausgangswelle 32. Wie dargestellt, kann die erste Ausgangswelle 32 durchgängig durch die Getriebeanordnung 48 ausgebildet sein und das freie Ende der ersten Ausgangswelle 32 kann auf der Seite der Eingangswelle 30 als weiterer Antrieb oder Abtrieb genutzt werden.

Fig. 4 zeigt eine dritte Ausführungsform der Getriebeanordnung 28 mit einer Verstelleinrichtung 36. Auch diese Getriebeanordnung 28 umfasst ein erstes Planetengetriebe 38, mit einem Hohlrad 40, einem Sonnenrad 42 und einer Mehrzahl von Planetenrädern 46 auf einem gemeinsamen Planetenträger 44. Die Getriebeanordnung 28 umfasst ferner eine Zusatzwelle 52, die koaxial zur ersten Ausgangswelle 32 angeordnet ist. Auf der Zusatzwelle 50 sind ein Stirnrad 50b und das Sonnenrad 42 gelagert. Die Verstelleinrichtung 36 umfasst wiederum ein Schneckengetriebe, wobei das Hohlrad 40 des ersten Planetengetriebes 38 eine Außenverzahnung aufweist und ein Schneckenrad des Schneckengetriebes bildet und die Verstellwelle 48 eine Schnecke des Schneckengetriebes umfasst.

Auf der ersten Ausgangswelle 32 ist der Planetenträger 44 gelagert. Die Eingangswelle 30 ist durchgängig ausgebildet und entspricht der zweiten Ausgangswelle 34. Auf der Eingangswelle 30 ist das erste Stirnrad 50a gelagert, das zusammen mit dem zweiten Stirnrad 50b auf der Zusatzwelle 52 eine Stirnradstufe 50 bildet, über die ein Drehmoment von der Eingangswelle 30 auf die Zusatzwelle 52 übertragen wird.

Eine über die Verstelleinrichtung 36 eingeleitete Verstellbewegung wird über das Hohlrad 40 und über die Planetenräder 46 auf den Planetenträger 44 übertragen, wodurch die Winkelposition der ersten Ausgangswelle 32 verändert wird. Die Stirnradstufe 50 bewirkt in diesem Fall eine Übersetzung von der Eingangswelle 30 auf die Zusatzwelle 52 ins Schnelle, während die Übersetzung innerhalb des ersten Planetengetriebes 38 eine Übersetzung ins Langsame bewirkt. Im normalen Betrieb der Nadelmaschine 2 steht das Hohlrad 40 fest. Die Zusatzwelle 52 kann derart ausgebildet sein, dass ein Wellenende über die Getriebeanordnung 28 hinausgeht und als weiterer Antrieb oder Abtrieb genutzt werden kann.

In Abwandlung der Ausführungsformen nach Fig. 3 und 4 umfasst die Verstelleinrichtung 36 anstelle des Schneckengetriebes eine Stirnradstufe, wobei auf der Verstellwelle 48 ein Stirnrad gelagert ist, das mit dem jeweiligen außen verzahnten Hohlrad 40 in Eingriff steht. Dadurch wird die Verstellwelle 48 parallel zur ersten und zur zweiten Ausgangswelle 32, 34 angeordnet. Das Hohlrad 40 und die Verstellwelle 48 können aber auch ein Kegelradgetriebe bilden.

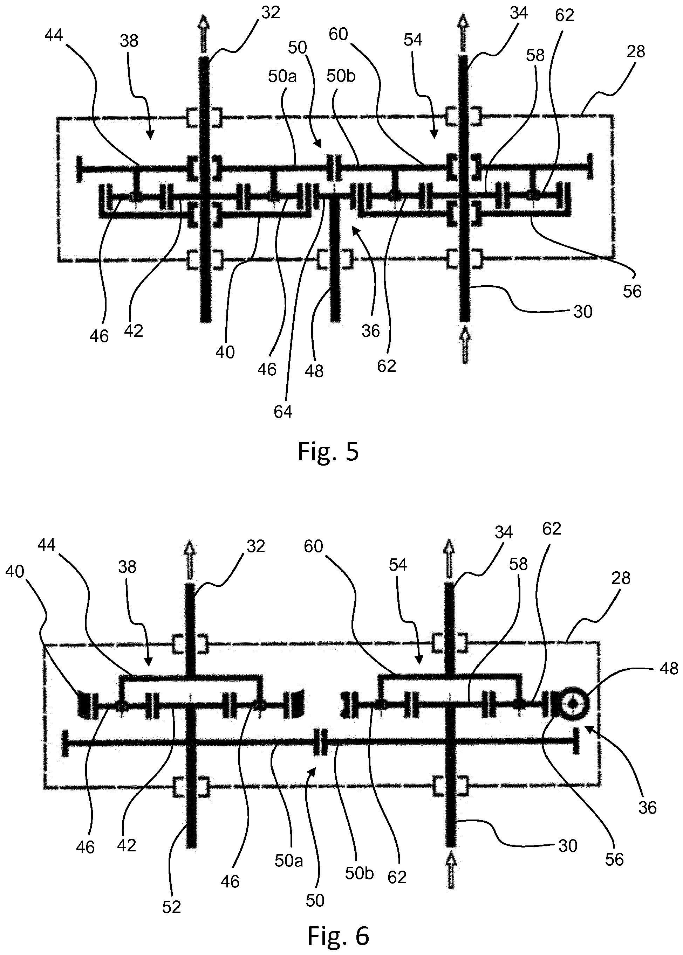

Gemäß den Ausführungsformen nach Fig. 5 und 6 umfasst die Getriebeanordnung 28 neben dem ersten Planetengetriebe 38 auch ein zweites Planetengetriebe 54. Vorzugsweise sind das erste und das zweite Planetengetriebe 38, 48 symmetrisch angeordnet und ihre Übersetzungen gleichen sich aus. Über die Verstellung einer Verstellwelle 48 wird eine Phasenverschiebung zwischen der ersten und zweiten Ausgangswelle 32, 34 bewirkt.

Wie auch das erste Planetengetriebe 38 umfasst das zweite Planetengetriebe 54 ein Hohlrad 56, ein Sonnenrad 58 und eine Mehrzahl von auf einem gemeinsamen Planetenträger 60 angeordneten Planetenrädern 62.

Fig. 5 zeigt eine vierte Ausführungsform der Getriebeanordnung 28 mit einer Verstelleinrichtung 36. Die Getriebeanordnung 28 umfasst das erste Planetengetriebe 38 und das zweite Planetengetriebe 54. Das Sonnenrad 42 des ersten Planetengetriebes 38 ist auf der ersten Ausgangswelle 32 drehfest gelagert und das Sonnenrad 58 des zweiten Planetengetriebes 54 ist auf der zweiten Ausgangswelle 34 drehfest gelagert. Die erste und die zweite Ausgangswelle 32, 34 sind durchgängig durch die Getriebeanordnung 28 ausgebildet. Die Eingangswelle 30 kann, wie abgebildet, durch die zweite Ausgangswelle 34 gebildet werden, oder alternativ durch die erste Ausgangswelle 32. Falls gewünscht, kann die jeweils andere aus erster und zweiter Ausgangswelle 32, 34 für einen zusätzlichen Antrieb oder Abtrieb genutzt werden.

Der Planetenträger 44 des ersten Planetengetriebes 38 und der Planetenträger 60 des zweiten Planetengetriebes 54 sind jeweils relativ zur ersten Ausgangswelle 32 bzw. zur zweiten Ausgangswelle 34 drehbar gelagert. Ferner umfasst der Planetenträger 44 das erste Stirnrad 50a und der Planetenträger 60 das zweite Stirnrad 50b, so dass die Planetenträger 44, 60 des ersten Planetengetriebes 38 und des zweiten Planetengetriebes 54 eine Stirnradstufe 50 bilden. Ein Drehmoment wird von der Eingangswelle 30 über das Sonnenrad 58 und den Planetenträger 60 des zweiten Planetengetriebes 54 auf den Planetenträger 44 und das Sonnenrad 42 des ersten Planetengetriebes 38 und dadurch auf die erste Ausgangswelle 32 übertragen.

Das Hohlrad 40 des ersten Planetengetriebes 38 und das Hohlrad 56 des zweiten Planetengetriebes 54 weisen jeweils eine Außenverzahnung auf. Die Verstelleinrichtung 36 umfasst die Verstellwelle 48, auf der ein Stirnrad 64 gelagert ist. Das Stirnrad 64 ist in radialer Richtung der Hohlräder 40, 56 zwischen diesen angeordnet und steht vorzugsweise mit beiden Hohlrädern 40, 56 des ersten Planetengetriebes 38 bzw. des zweiten Planetengetriebes 54 in Eingriff. Durch Drehen der Verstellwelle 48 werden gleichzeitig beide Hohlräder 40, 56 gedreht, wodurch eine Veränderung der Winkelposition beider Ausgangswellen 32, 34 möglich ist. Alternativ steht das Stirnrad 64 der Verstellwelle 48 nur mit einem Hohlrad 40, 56 eines Planetengetriebes 38, 54 in Eingriff. Im normalen Betrieb der Nadelmaschine 2 wird die Verstellwelle 48 nicht betätigt und steht still. Entsprechend stehen auch die Hohlräder 40, 56 der Planetengetriebe 38, 54 fest.

Fig. 6 zeigt eine fünfte Ausführungsform der Getriebeanordnung 28 mit einer Verstelleinrichtung 36. Auch hier umfasst die Getriebeanordnung 28 das erste Planetengetriebe 38 und das zweite Planetengetriebe 54. Die Planetengetriebe 38, 54 stehen bei dieser Ausführungsform nicht unmittelbar miteinander in Eingriff. Vielmehr ist auf der Eingangswelle 30 ein Stirnrad 50b gelagert, das mit dem Stirnrad 50a auf der Zusatzwelle 52 in Eingriff steht, um eine Drehbewegung von der Eingangswelle 30 auf den Strang der ersten Ausgangswelle 32 zu übertragen. Auf der Eingangswelle 30 ist ferner das Sonnenrad 58 des zweiten Planetengetriebes 54 gelagert. Auf der Zusatzwelle 52 ist das Sonnenrad 42 des ersten Planetengetriebes 38 gelagert. Auf der ersten Ausgangswelle 32 ist der Planetenträger 44 des ersten Planetengetriebes 38 gelagert, während auf der zweiten Ausgangswelle 34 der Planetenträger 60 des zweiten Planetengetriebes 54 gelagert ist.

Die Verstelleinrichtung 36 umfasst erneut ein Schneckengetriebe wobei das Hohlrad 56 des zweiten Planetengetriebes 54 eine Außenverzahnung aufweist und ein Schneckenrad bildet. Die Verstellwelle 48 umfasst eine Schnecke, die mit dem Hohlrad 56 in Eingriff steht. Durch Drehen der Verstellwelle 58 wird eine Verstellbewegung über das Hohlrad 56 und, bei feststehender Eingangswelle 30, über die Planetenräder 62 auf den Planetenträger 60 des zweiten Planetengetriebes 54 übertragen. Dadurch wird die Winkelposition der zweiten Ausgangswelle 34 verändert. Das Hohlrad 40 des ersten Planetengetriebes 38 ist drehfest, zum Beispiel in einem Maschinengestell, gelagert. Es versteht sich, dass die Verstelleinrichtung 36 alternativ auch am Hohlrad 40 des ersten Planetengetriebes 38 ausgebildet sein kann oder dass an beiden Hohlrädern 40, 56 jeweils eine Verstelleinrichtung 36 vorgesehen ist, um die Winkelposition beider Ausgangswellen 32, 34 unabhängig voneinander zu verändern.

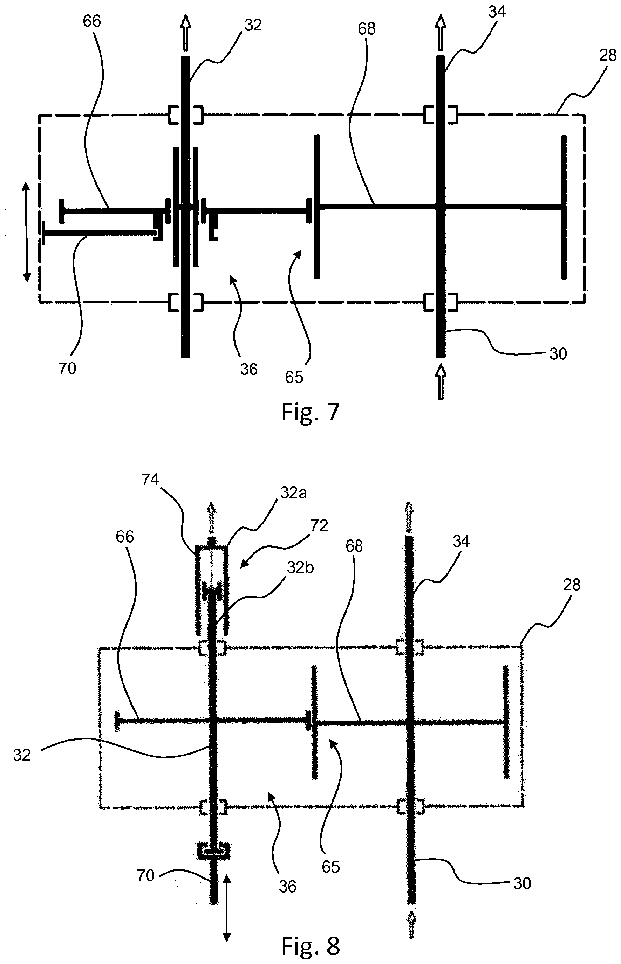

In den Fig. 7 und 8 sind zwei Ausführungsformen einer Getriebeanordnung 28 mit einer Verstelleinrichtung 36 dargestellt, bei der die Phasenverschiebung beziehungsweise Veränderung der Winkelposition der beiden Ausgangswellen 32, 34 relativ zueinander durch axiales Verschieben von zwei miteinander in Eingriff stehenden, schräg verzahnten Zahnrädern relativ zueinander erfolgt. Über den Winkel der Schrägverzahnung und den Betrag der axialen Verschiebung ist die Änderung der Winkelposition genau bestimmbar. Der maximale Verstellwinkel ist durch die Konstruktion vorgegeben.

Gemäß diesen Ausführungsformen umfasst die Getriebeanordnung 28 eine schräg verzahnte Stirnradstufe 65 mit einem ersten Stirnrad 66 und einem mit dem ersten Stirnrad 66 in Eingriff stehenden zweiten Stirnrad 68, wobei das erste schräg verzahnte Stirnrad 66 in axialer Richtung verschiebbar gelagert ist. Das erste und das zweite Stirnrad 66, 68 sind auf der ersten bzw. zweiten Ausgangswelle 32, 34 gelagert, jedoch nicht zwangsläufig axial auf diesen festgelegt, wie sich aus der nachfolgenden Beschreibung ergibt.

Die Verstelleinrichtung 36 umfasst die schräg verzahnte Stirnradstufe 65 und Verstellmittel, die dazu eingerichtet sind, das erste Stirnrad 66 linear zu verschieben. Durch die lineare, axiale Verschiebung des ersten schräg verzahnten Stirnrads 66 wird aufgrund der Schrägverzahnung der Stirnräder 66, 68 eine Drehbewegung der Stirnräder 66, 68 relativ zueinander initiiert. Dabei kann wahlweise das erste oder das zweite schräg verzahnte Stirnrad 66, 68 festgehalten werden, so dass sich jeweils das andere Stirnrad 66, 68 verdreht.

Gemäß Fig. 7 ist das erste Stirnrad 66 auf der ersten Ausgangswelle 32 drehfest gelagert und das zweite schräg verzahnte Stirnrad 68 ist auf der zweiten Ausgangswelle 34 drehfest gelagert und auf der zweiten Ausgangswelle 34 axial festgelegt. Eine der beiden Ausgangswellen 32, 34, hier die zweite Ausgangswelle 34, bildet zugleich die Eingangswelle 30. Falls gewünscht, kann die jeweils andere Ausgangswelle 32, 34 als zusätzlicher Antrieb oder Abtrieb genutzt werden.

Zur Übertragung eines Drehmoments von der Eingangswelle 30 auf die erste Ausgangswelle 32 stehen das erste Stirnrad 66 und zweite Stirnrad 68 miteinander in Eingriff.

Das erste schräg verzahnte Stirnrad 66 ist drehfest aber axial verschiebbar auf der ersten Ausgangswelle 32 gelagert. Entsprechende Welle-Nabe-Verbindungen, die eine axiale Verschiebung erlauben, sind dem Fachmann bekannt. Mit dem ersten Stirnrad 66 ist ein Verstellmittel 70 verbunden. Über das Verstellmittel 70 kann die axiale Verschiebung des Stirnrads 66 eingeleitet werden. Das Verstellmittel 70 kann manuell betätigt werden oder mittels eines Antriebs, beispielsweise mittels eines Linearantriebs oder eines Spindelantriebs. Die lineare Verstellbewegung ist in Fig. 7 durch einen Doppelpfeil gekennzeichnet.

Das Verstellmittel 70 ist beispielsweise als Schiebegabel ausgebildet, die mit dem ersten Stirnrad 66 gekoppelt ist. Derartige Schiebegabeln können beispielsweise nach dem Vorbild von Schaltgabeln gebildet sein, wie sie aus Schaltgetrieben, insbesondere im Kfz-Bau bekannt sind. Da das erste Stirnrad 66 axial verschiebbar auf der ersten Ausgangswelle 32 gelagert ist, wird die axiale Verschiebung durch das Verstellmittel 70 nicht auf die erste Ausgangswelle 32 und die nachfolgenden Komponenten übertragen. Das erste Stirnrad 66 kann jedoch auch axial auf der ersten Ausgangswelle 32 festgelegt sein, wobei dann ein Ausgleich der axialen Verschiebung der ersten Ausgangswelle 32 vorzusehen ist, wie anhand der Ausführungsform nach Fig. 8 beschrieben ist.

Fig. 8 zeigt schließlich eine siebte Ausführungsform der Getriebeanordnung 28 mit einer Verstelleinrichtung 36. In dieser Ausführungsform ist das erste schräg verzahnte Stirnrad 66 auf der ersten Ausgangswelle 32 drehfest gelagert und das zweite schräg verzahnte Stirnrad 68 ist auf der zweiten Ausgangswelle 34 drehfest gelagert. Die zweite Ausgangswelle 34 bildet zugleich die Eingangswelle 30 und ein Drehmoment wird über die schräg verzahnte Stirnradstufe 65 von der Eingangswelle 30 auf die erste Ausgangswelle 32 übertragen, wie zuvor zu Fig. 7 beschrieben.

Bei dieser Ausführungsform sind beide schrägverzahnten Stirnräder 66,68 axial auf der jeweiligen Ausgangswelle 32, 34 festgelegt. Um eine lineare Verschiebung der schräg verzahnten Zahnräder 66, 68 relativ zueinander zu ermöglichen, ist die erste Ausgangswelle 32 axial verschiebbar in der Nadelmaschine 2 gelagert. Dies kann beispielsweise mittels geeigneter Radiallager geschehen, die im Maschinengestell aufgenommen sind und die erste Ausgangswelle 32 derart lagern, dass diese sowohl drehbar als auch axial verschiebbar ist.

Die axiale Verschiebung der Ausgangswelle 32 erfolgt über Verstellmittel 70, die die Verstellbewegung in die erste Ausgangswelle 32 einleiten. Wie dargestellt, können die Verstellmittel 70 an einem Ende der ersten Ausgangswelle 32 angreifen und diese unmittelbar axial verschieben. Beispielsweise umfassen die Verstellmittel 70 einen Linearantrieb, der durch eine Kupplung von der ersten Ausgangswelle 32 getrennt ist. Alternativ kann die erste Ausgangswelle 32 oder das mit ihr fest verbundene erste Stirnrad 66 auch mittels einer Schiebegabel axial verschoben werden, wie sie zuvor unter Bezugnahme auf Fig. 7 beschrieben wurde.

Die erste Ausgangswelle 32 umfasst ferner eine Ausgleichseinrichtung 72, die die axiale Verschiebung der ersten Ausgangswelle 32 aufnimmt und ausgleicht. Dadurch wird sichergestellt, dass sich ein der Getriebeanordnung 28 nachfolgender Wellenabschnitt 32a der ersten Ausgangswelle 32 nicht axial verschiebt. Dies ist notwendig, damit die axiale Verschiebung nicht auf den nachfolgenden Hauptpleuel und somit auf die Nadelanordnung übertragen wird. Eine entsprechende Ausgleichseinrichtung 72 kann auch bei der Ausführungsform nach Fig. 7 vorgesehen werden, falls in dieser das erste schräg verzahnte Stirnrad 66 axial auf der ersten Ausgangswelle 32 festgelegt werden sollte.

Die Ausgleichseinrichtung 72 umfasst vorzugsweise eine Welle-Nabe-Verbindung zwischen zwei Wellenabschnitten 32a und 32b der ersten Ausgangswelle 32, die die zwei Wellenabschnitte 32a, 32b drehfest und linear zueinander verschiebbar miteinander verbindet.

Beispielsweise ist die Ausgleichseinrichtung 72 als Zahnkupplung ausgebildet. Der Wellenabschnitt 32a der ersten Ausgangswelle 32 kann dann eine Nabe 74 in Form einer Hohlwelle bilden, die eine Innenverzahnung aufweist. In der Nabe 74 ist der Wellenabschnitt 32 der ersten Ausgangswelle 32 aufgenommen, der eine mit der Innenverzahnung der Nabe 74 korrespondierende Außenverzahnung aufweist, sodass diese miteinander in Eingriff stehen. Der Wellenabschnitt 32b und die Nabe 74 sind axial zueinander verschiebbar. Eine Drehbewegung wird unmittelbar zwischen dem Wellenabschnitt 32b und der Nabe 74 übertragen. Diese oder ähnliche Ausführungsformen geeigneter Welle-Nabe-Verbindungen sind dem Fachmann ebenfalls bekannt.

Allgemein können die Merkmale der hierin beschriebenen Ausführungsformen miteinander kombiniert werden, um die jeweiligen Vorteile bestmöglich zu nutzen.

Durch eine erfindungsgemäße Verstelleinrichtung, die eine Getriebestufe der Getriebeanordnung zwischen den zwei Hauptwellen einer Nadelmaschine umfasst, ist es möglich, eine sehr einfache und kompakte Konstruktion zur Phasenverstellung zwischen den zwei Hauptwellen bereit zu stellen, die kostengünstig umsetzbar und leicht in die Nadelmaschine integrierbar ist. Weitere alternative Ausführungsformen sind dem Fachmann basierend auf der hierin beschriebenen Offenbarung ersichtlich.

## Patentansprüche

1. Nadelmaschine (2) zum Vernadeln einer Vliesbahn mit:
einer Nadelbalkenanordnung (4), die mindestens einen Nadelbalken (6) umfasst;
einer ersten Hauptwelle (12), die mittels eines ersten Hauptpleuels (14), der exzentrisch auf der ersten Hauptwelle (12) gelagert ist, mit der Nadelbalkenanordnung (4) verbunden ist;
einer zweiten Hauptwelle (16), die mittels eines zweiten Hauptpleuels (18), der exzentrisch auf der zweiten Hauptwelle (16) gelagert ist, mit der Nadelbalkenanordnung (4) verbunden ist;
einer Getriebeanordnung (28), die eine Eingangswelle (30) und zwei Ausgangswellen (32, 34) umfasst, wobei die erste Hauptwelle (12) und die zweite Hauptwelle (16) die zwei Ausgangswellen (32, 34) bilden; und
einem Antrieb (26), der die Eingangswelle (30) rotatorisch antreibt;
einer Verstelleinrichtung (36), die eine Getriebestufe der Getriebeanordnung (28) umfasst und dazu eingerichtet ist, eine Winkelposition der ersten Hauptwelle (12) und der zweiten Hauptwelle (16) relativ zueinander zu verstellen;
wobei die Getriebeanordnung (28) eine schrägverzahnte Stirnradstufe (65) mit einem ersten Stirnrad (66) und einem mit dem ersten Stirnrad (66) in Eingriff stehenden zweiten Stirnrad (68) umfasst, wobei das erste Stirnrad (66) in axialer Richtung verschiebbar gelagert ist; und
wobei die Verstelleinrichtung (36) die schrägverzahnte Stirnradstufe (65) und Verstellmittel (70) umfasst, die dazu eingerichtet sind, das erste Stirnrad (66) linear zu verschieben;
**dadurch gekennzeichnet, dass**
das erste Stirnrad (66) auf der ersten Hauptwelle (12) drehfest gelagert ist und das zweite Stirnrad (68) auf der zweiten Hauptwelle (16) drehfest gelagert ist.

2. Nadelmaschine (2) nach Anspruch 1, **dadurch gekennzeichnet, dass** das erste Stirnrad (66) auf der ersten Hauptwelle (12) axial verschiebbar gelagert ist.

3. Nadelmaschine (2) nach Anspruch 2, **dadurch gekennzeichnet, dass** die Verstellmittel (70) eine Schiebegabel umfassen, die mit dem ersten Stirnrad (66) gekoppelt ist.

4. Nadelmaschine (2) nach Anspruch 1, **dadurch gekennzeichnet, dass** das erste Stirnrad (66) axial auf der ersten Hauptwelle (12) festgelegt ist und die erste Hauptwelle (12) linear verschiebbar in der Nadelmaschine (2) gelagert ist.

5. Nadelmaschine (2) nach Anspruch 4, **dadurch gekennzeichnet, dass** die erste Hauptwelle (12) eine Ausgleichseinrichtung (72) umfasst, die zwei Wellenabschnitte (32a, 32b) der ersten Hauptwelle (12) drehfest und axial zueinander verschiebbar miteinander verbindet.

## Claims

1. Needle machine (2) for needle-bonding a non-woven web, having:
- a needle beam assembly (4) which comprises at least one needle beam (6);
- a first main shaft (12) which is connected to the needle beam assembly (4) by means of a first main con rod (14) that is eccentrically mounted on the first main shaft (12);
- a second main shaft (16) which is connected to the needle beam assembly (4) by means of a second main con rod (18) that is eccentrically mounted on the second main shaft (16);
- a gearbox assembly (28) which comprises an input shaft (30) and two output shafts (32, 34), wherein the first main shaft (12) and the second main shaft (16) form the two output shafts (32, 34); and
- a drive (26) which drives the input shaft (30) in a rotating manner;
- an adjustment installation (36) which comprises a gear stage of the gearbox assembly (28) and is specified for adjusting an angular position of the first main shaft (12) and of the second main shaft (16) relative to one another;
- wherein the gearbox assembly (28) comprises a helical spur gear stage (65) having a first spur gear (66) and a second spur gear (68) meshing with the first spur gear (66), wherein the first spur gear (66) is mounted so as to be displaceable in the axial direction; and
- wherein the adjustment installation (36) comprises the helical spur gear stage (65) and adjustment means (70) which are specified for displacing the first spur gear (66) in a linear manner;
**characterized in that**
the first spur gear (66) is mounted in a rotationally fixed manner on the first main shaft (12), and the second spur gear (68) is mounted in a rotationally fixed manner on the second main shaft (16) .

2. Needle machine (2) according to Claim 1, **characterized in that** the first spur gear (66) is mounted so as to be axially displaceable on the first main shaft (12).

3. Needle machine (2) according to Claim 2, **characterized in that** the adjustment means (70) comprise a sliding fork which is coupled to the first spur gear (66).

4. Needle machine (2) according to Claim 1, **characterized in that** the first spur gear (66) is axially established on the first main shaft (12), and the first main shaft (12) is mounted so as to be displaceable in a linear manner in the needle machine (2).

5. Needle machine (2) according to Claim 4, **characterized in that** the first main shaft (12) comprises a compensation installation (72) which connects two shaft portions (32a, 32b) of the first main shaft (12) in a rotationally fixed manner and so as to be axially displaceable relative to one another.

## Revendications

1. Machine à aiguilleter (2) destinée à aiguilleter une nappe de non-tissé, ladite machine comprenant :
un ensemble de barres à aiguilles (4) comprenant au moins une barre à aiguilles (6) ;
un premier arbre principal (12) qui est relié à l'ensemble de barres à aiguilles (4) au moyen d'une première bielle principale (14) qui est montée de manière excentrique sur le premier arbre principal (12) ;
un deuxième arbre principal (16) qui est relié à l'ensemble de barres à aiguilles (4) au moyen d'une deuxième bielle principale (18) qui est montée de manière excentrique sur le deuxième arbre principal (16) ;
un ensemble de transmission (28) qui comprend un arbre d'entrée (30) et deux arbres de sortie (32, 34), le premier arbre principal (12) et le deuxième arbre principal (16) formant les deux arbres de sortie (32, 34) ; et
un entraînement (26) qui entraîne en rotation l'arbre d'entrée (30) ;
un dispositif de réglage (36) qui comprend un étage de transmission de l'ensemble de transmission (28) et qui est conçu pour régler une position angulaire du premier arbre principal (12) et du deuxième arbre principal (16) l'un par rapport à l'autre ;
l'ensemble de transmission (28) comprenant un étage à roues droites (65) à denture hélicoïdale comprenant une première roue droite (66) et une deuxième roue droite (68) en engrènement avec la première roue droite (66), la première roue droite (66) étant montée de manière coulissante dans la direction axiale ; et
le dispositif de réglage (36) comprenant l'étage à roues droites (65) à denture hélicoïdale et des moyens de réglage (70) qui sont conçus pour faire coulisser la première roue droite (66) linéairement ;
**caractérisé en ce que**
la première roue droite (66) est montée solidairement en rotation sur le premier arbre principal (12) et la deuxième roue droite (68) est montée solidairement en rotation sur le deuxième arbre principal (16).

2. Machine à aiguilleter (2) selon la revendication 1, **caractérisée en ce que** la première roue droite (66) est montée de manière à coulisser axialement sur le premier arbre principal (12).

3. Machine à aiguilleter (2) selon la revendication 2, **caractérisée en ce que** les moyens de réglage (70) comprennent une fourche coulissante qui est accouplée à la première roue droite (66).

4. Machine à aiguilleter (2) selon la revendication 1, **caractérisée en ce que** la première roue droite (66) est fixée axialement sur le premier arbre principal (12) et le premier arbre principal (12) est monté de manière à coulisser linéairement dans la machine à aiguilleter (2).

5. Machine à aiguilleter (2) selon la revendication 4, **caractérisée en ce que** le premier arbre principal (12) comprend un dispositif de compensation (72) qui relie deux portions d'arbre (32a, 32b) du premier arbre principal (12) solidairement en rotation et de manière à coulisser axialement l'une par rapport à l'autre.
